(19) Europäisches Patentamt
European Patent Office
Office européen des brevets

(11) Veröffentlichungsnummer: **0 071 783**
**B1**

(12) # EUROPÄISCHE PATENTSCHRIFT

(45) Veröffentlichungstag der Patentschrift: **24.10.84**

(51) Int. Cl.³: **C 07 F 9/42**

(21) Anmeldenummer: **82106285.8**

(22) Anmeldetag: **14.07.82**

(54) **Verfahren zur Herstellung von Alkyl- oder Arylthiophosphonsäuredichloriden.**

(30) Priorität: **07.08.81 DE 3131249**

(43) Veröffentlichungstag der Anmeldung:
**16.02.83 Patentblatt 83/7**

(45) Bekanntmachung des Hinweises auf die Patenterteilung:
**24.10.84 Patentblatt 84/43**

(84) Benannte Vertragsstaaten:
**CH DE FR GB IT LI**

(56) Entgegenhaltungen:
**DE - B - 1 210 834**
**FR - A - 2 064 774**

(73) Patentinhaber: **HOECHST AKTIENGESELLSCHAFT,**
**Postfach 80 03 20, D-6230 Frankfurt am Main 80 (DE)**

(72) Erfinder: **Krause, Werner, Dr., Alleestrasse 42,**
**D-5030 Hürth (DE)**

EP 0 071 783 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Alkyl- oder Arylthiophosphonsäuredichloriden durch katalytische Umsetzung von Alkyl- oder Aryldichlorphosphanen mit Schwefel.

Es ist bereits aus Houben-Weyl, „Methoden der organischen Chemie", Bd. XII/1, S. 555, bekannt, Alkyl- oder Arylthiophosphonsäuredichloride durch Umsetzung der entsprechenden Alkyl- oder Aryldichlorphosphane mit Schwefel unter dem katalytischen Einfluss von z.B. $AlCl_3$, $FeCl_3$ oder $ZnCl_2$ herzustellen. Weiterhin beschreibt die französische Patentschrift Nr. 2064774 ein Verfahren zur kontinuierlichen Herstellung von Methanthiophosphonsäuredichlorid. Dabei wird Methyldichlorphosphan mit Schwefel und einem Zusatz von 4 Gew.-% $AlCl_3$, bezogen auf $CH_3PCl_2$, bei ca. 150°C umgesetzt. Die Ausbeute beträgt nach der destillativen Abtrennung des Produkts aus dem Reaktionsgemisch 92% der Theorie. Der dabei anfallende schwarz gefärbte Destillationsrückstand kann gegebenenfalls erneut für weitere Umsetzungen verwendet werden, doch zeigt sich dabei, dass die Aktivität des Katalysators rasch abnimmt und deshalb weitere Zusätze von z.B. $AlCl_3$ zum Reaktionsansatz notwendig sind. Damit vergrössert sich zwangsläufig die Menge des jeweils anfallenden Destillationsrückstandes, der aus Gründen des Umweltschutzes nur mit erheblichem Aufwand beseitigt werden kann.

Überraschenderweise wurde nun gefunden, dass substituierte Phosphonium- oder Ammoniumsalze ebenfalls die Umsetzung von Alkyl- oder Aryldichlorphosphanen mit Schwefel katalysieren, wobei jedoch die katalytische Aktivität der Salze im Laufe der Reaktion nicht verlorengeht. Der Katalysator muss also nur ein einziges Mal zu Beginn der Reaktion zugesetzt werden. Für die Folgeansätze wird jeweils der Destillationsrückstand des vorangegangenen Ansatzes eingesetzt.

Gegenstand der Erfindung ist somit ein Verfahren zur Herstellung von Alkyl- oder Arylthiophosphonsäuredichloriden, durch Umsetzung von Alkyl- oder Aryldichlorphosphanen mit mindestens stöchiometrischen Mengen von Schwefel bei einer Temperatur oberhalb des Schmelzpunktes des Schwefels und in Gegenwart eines Katalysators und Abtrennen des entstandenen Alkyl- oder Arylthiophosphonsäuredichlorids aus dem Reaktionsgemisch nach beendeter Reaktion, welches dadurch gekennzeichnet ist, dass man die Reaktion bei einer Temperatur zwischen dem Schmelzpunkt des Schwefels und dem Siedepunkt des entstehenden Alkyl- oder Arylthiophonsäuredichlorids und in Gegenwart eines Katalysators der allgemeinen Formel I oder II:

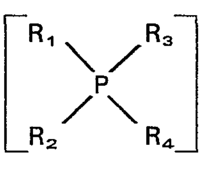 $A^{(-)}$ (I)

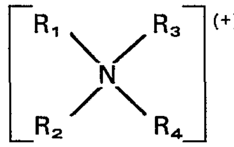 $A^{(-)}$ (II)

in welcher $R_1$, $R_2$, $R_3$ und $R_4$ gleiche oder verschiedene Alkyl-, Aryl-, Alkaryl- oder Aralkylreste mit 1 bis 22 C-Atomen bedeuten und A der anionische Rest einer anorganischen oder organischen Säure ist, durchführt, wobei die Menge des Katalysators 0,01 bis 5 Gew.-%, bezogen auf die Menge der Phosphankomponente, beträgt; dass man nach beendeter Reaktion das Alkyl- oder Arylthiophosphonsäuredichlorid aus dem Reaktionsgemisch abtrennt und den dabei anfallenden katalysatorhaltigen Rückstand für weitere Umsetzungen von Alkyl- oder Aryldichlorphosphanen mit Schwefel verwendet.

Die Alkyl- oder Arylreste der Dichlorphosphane bzw. der erfindungsgemäss herstellbaren Thiophosphonsäuredichloride enthalten vorzugsweise 1 bis 8 Kohlenstoffatome.

Als Ausgangsprodukte werden neben dem Schwefel insbesondere Methyl-, Ethyl- oder Phenyldichlorphosphan eingesetzt und bei einer Temperatur von 130-170°C umgesetzt. Zur Beschleunigung der Reaktion haben sich als Katalysator mit Vorteil Tetraalkylammonium- oder Tetraalkylphosphoniumchlorid, -bromid, -sulfat, -nitrat oder -acetat bewährt.

Nach einer bevorzugten Ausführungsform des Verfahrens der Erfindung trägt man die Phosphankomponente portionsweise in ein Gemisch aus Schwefel und dem Katalysator ein und setzt nach beendeter Phosphanzugabe das Reaktionsgemisch einer Nachreaktionszeit von 5 bis 60 min aus. Die Menge des Katalysators beträgt vorteilhafterweise 0,05-2 Gew.-%, bezogen auf die Menge der Phosphankomponente. Höhere Katalysatormengen wirken sich nicht schädlich aus, sie sind jedoch überflüssig und aus Gründen der Wirtschaftlichkeit zu vermeiden. Unter dem Einfluss des Katalysators läuft die erfindungsgemässe Umsetzung rasch und vollständig ab. Nach beendeter Umsetzung wird das Thiophosphonsäuredichlorid aus dem rohen Reaktionsgemisch abdestilliert. Der Katalysator verbleibt im Destillationsrückstand, der nach entsprechender Zugabe von Schwefel wiederum als Vorlage für den folgenden Ansatz dient.

Der Vorteil der erfindungsgemäss als Katalysator vorgeschlagenen Phosphonium- bzw. Ammoniumsalze gegenüber den bisher verwendeten Metallchloriden besteht darin, dass beispielsweise hydrolytische Einflüsse nicht zu einer Zersetzung der Phosphonium- bzw. Ammoniumsalze führen, wie es bei den Metallchloriden der Fall ist. Insbesondere die Phosphoniumsalze zeichnen sich durch eine hohe Stabilität aus. Sie werden somit während der Reaktion der Ausgangsstoffe bzw. der Destillation des Thiophosphonsäuredichlorids chemisch nicht verändert und können durch Rückführung des Destillationsrückstandes wieder in eine nachfolgende Reaktion eingebracht werden. In einer Versuchsreihe von 19 Ansätzen mit jeweiliger Rückführung des Destillationssumpfes konnte keine Abnahme der Katalysatoraktivität beobachtet werden, so dass man davon ausgehen kann, dass der einmalig zugesetzte Katalysator auch noch für eine erheblich höhere Zahl von Reaktionscyclen verwendet werden kann. Damit gestaltet sich das erfindungsgemässe Verfahren trotz des höheren Katalysatorpreises schon nach wenigen Reaktionscyclen wirtschaftlicher als die bisher bekannten Verfahren. Des weiteren fällt bei dem erfindungsgemässen Verfahren eine geringere Menge an Destillationsrückstand an, wodurch weitere Kosten zu dessen Aufarbeitung oder Vernichtung eingespart werden.

Die nach dem Verfahren der Erfindung hergestellten Alkyl- bzw. Arylthiophosphonsäuredichloride werden in höheren Ausbeuten als bei den bisher bekannten Verfahren erhalten und zeichnen sich durch eine sehr hohe Reinheit aus.

*Beispiel 1*

In einem Mehrhalskolben, ausgestattet mit Rührer, Tropftrichter, Rückflusskühler und Thermometer wurden 184 g (5,75 mol) Schwefel und 1,6 g Tetrabutylphosphoniumbromid vorgelegt und bei 140-150°C unter Rühren 577 g (4,93 mol) Methyldichlorphosphan zugetropft. Nach einer Nachreaktionszeit von 30 min bei 150°C wurde aus dem Reaktionsgemisch bei Normaldruck nach Abtrennen eines Vorlaufes Methanthiophosphonsäuredichlorid abdestilliert.

Der Destillationsrückstand wurde mit weiterem Schwefel und dem Vorlauf des ersten Ansatzes versetzt und erneut Methyldichlorphosphan zugetropft. Auf diese Weise wurden vier weitere Ansätze durchgeführt und insgesamt 2670 g $CH_3PCl_2$ mit Schwefel zu 3356 g $CH_3PSCl_2$ umgesetzt. Die Ausbeute betrug 98,7% der Theorie bei einer Reinheit des Produkts von >98% ($n_D^{23}$ = 1,5481). Der Destillationsrückstand in einer Menge von 57,5 g, entsprechend 1,7% der Produktmenge, enthielt den unverändert aktiven Katalysator und konnte für weitere Ansätze eingesetzt werden.

*Beispiel 2*

In einer Apparatur analog Beispiel 1 wurden 192 g (6 mol) Schwefel und 1,5 g Tetramethylphosphoniumchlorid vorgelegt. Bei etwa 150°C wurden unter Rühren 585 g $CH_3PCl_2$ (5 mol) in das vorgelegte Gemisch zugetropft, wobei die Reaktion eintrat. Nach einer Nachreaktionszeit von 15 min wurde das erhaltene Rohprodukt destilliert, wobei zunächst ein Vorlauf von 3 bis 5 Gew.-% der Gesamtmenge erhalten wurde. Die Ausbeute an Methanthiophosphonsäuredichlorid mit einer Reinheit von 99,5% betrug 636 g. Vorlauf und Destillationsrückstand wurden für einen weiteren Ansatz verwendet.

Auf diese Weise wurden 18 Ansätze ohne zwischenzeitlichen Katalysatorzusatz durchgeführt. Nach insgesamt 19 Ansätzen wurde die Versuchsreihe abgebrochen, ohne dass ein Abfall der Katalysatoraktivität eintrat.

Es wurden insgesamt 13871 g Methanthiophosphonsäuredichlorid mit einer Reinheit von 99,5% in einer Ausbeute von 98,0% der Theorie hergestellt. Als Destillationssumpf fielen nach 19 Ansätzen 165 g oder 1,2% der Produktmenge an.

*Beispiel 3*

In einer Apparatur analog Beispiel 1 wurden 256 g (8 mol) Schwefel und 1,5 g Tetrabutylammoniumchlorid vorgelegt und unter Rühren bei etwa 140-150°C 910 g (7,78 mol) Methyldichlorphosphan zugetropft. Nach einer Nachreaktionszeit von 15 min bei 150°C wurden aus dem Reaktionsgemisch nach Abtrennung eines Vorlaufes 1025 g Methanthiophosphonsäuredichlorid abdestilliert. Die Reinheit des Dichlorids betrug >98%. Der Destillationsrückstand war für den Einsatz in weiteren Versuchen geeignet.

*Beispiel 4*

In einer Apparatur analog Beispiel 1 wurden 74 g (2,31 mol) Schwefel und 1,6 g Tetrabutylphosphoniumbromid vorgelegt und unter Rühren bei etwa 160°C 272 g (2,08 mol) Ethyldichlorphosphan zugetropft. Das Reaktionsgemisch wurde einer Nachreaktion von 30 min bei 160°C überlassen. Unter vermindertem Druck von ca. 95 mbar wurde aus dem Reaktionsgemisch zunächst ein Vorlauf abdestilliert und anschliessend bei einer Kopftemperatur von 92-94°C das Ethanthiophosphonsäuredichlorid. Es wurden 280 g des Dichlorids mit einer Reinheit von 98,1% und einem Brechungsindex von $n_D^{22}$ = 1,5406 erhalten.

Durch Rückführung von Vorlauf und Destillationsrückstand kann die Ausbeute erheblich gesteigert werden.

*Beispiel 5*

In einer Apparatur analog Beispiel 1 wurden 40 g (1,25 mol) Schwefel und 2 g Tetrabutylphosphoniumbromid vorgelegt und in das Gemisch unter Rühren bei ca. 160°C 210 g (1,17 mol) $C_6H_5PCl_2$ zugetropft. Nach einer Nachreaktion von 30 min bei 160°C wurde das Gemisch im Vakuum bei 4 mbar destilliert. Es wurden 212 g Benzolthiophosphonsäuredichlorid mit einer Reinheit von 99,6% und einem Brechungsindex $n_D^{22}$ von 1,6230 erhalten.

Durch Rückführung von Vorlauf und Destillationsrückstand kann die Ausbeute erheblich gesteigert werden.

*Vergleichsbeispiel 1*

In einer Apparatur analog Beispiel 1 wurden chargenweise insgesamt 11 561 g (98,8 mol) Methyldichlorphosphan mit 3162 g (98,8 mol) Schwefel und einem Katalysatorzusatz von insgesamt 139,5 g Aluminiumchlorid bei 140-150°C umgesetzt. Aus dem Reaktionsgemisch wurden 14154 g Methanthiophosphonsäuredichlorid mit einer Reinheit von >98% und einem $n_D^{22}$ von 1,5488 abdestilliert. Die Ausbeute betrug 96,1% der Theorie und es verblieb ein Destillationsrückstand von 550 g (3,9% der Produktmenge).

Aus nachstehendem Vergleich der Versuchsdaten von Beispiel 2 und dem Vergleichsbeispiel 1 ist die Überlegenheit der erfindungsgemässen Arbeitsweise ersichtlich.

| | Beispiel 2 | Vergleichsbeispiel 1 |
|---|---|---|
| Produktmenge | 13871 g | 14154 g |
| Katalysatormenge | 1,5 g $(CH_3)_4PCl$ | 139,5 g $AlCl_3$ |
| Destillationsrückstand | 165 g | 550 g |
| Ausbeute | 98,0% d. Th. | 96,1% d. Th. |

*Vergleichsbeispiel 2*

In einer Apparatur analog Beispiel 1 wurden 1259 g (39,3 mol) Schwefel und 4599 g (39,3 mol) Methyldichlorphosphan mit einem Katalysatorzusatz von 28 g $AlCl_3$ bei 140-150°C umgesetzt. Nach dem Abdestillieren des Methanthiophosphonsäuredichlorids aus dem Reaktionsgemisch wurde der Destillationsrückstand mit 1074 g Schwefel versetzt, ohne erneut $AlCl_3$ zuzugeben. Nach einem Zusatz von 1200 ml $CH_3PCl_2$ trat plötzlich starker Rückfluss von nicht umgesetztem $CH_3PCl_2$ auf, welches nur sehr langsam abreagierte. Dieses Phänomen ist auf die nachlassende Aktivität des Katalysators zurückzuführen. Nach Zusatz von 20 g frischem $AlCl_3$ konnte die Reaktion zu Ende geführt werden.

## Patentansprüche

1. Verfahren zur Herstellung von Alkyl- oder Arylthiophosphonsäuredichloriden, durch Umsetzung von Alkyl- oder Aryldichlorphosphanen mit mindestens stöchiometrischen Mengen von Schwefel bei einer Temperatur oberhalb des Schmelzpunktes des Schwefels und in Gegenwart eines Katalysators und Abtrennen des entstandenen Alkyl- oder Arylthiophosphonsäuredichlorids aus dem Reaktionsgemisch nach beendeter Reaktion, dadurch gekennzeichnet, dass man die Reaktion bei einer Temperatur zwischen dem Schmelzpunkt des Schwefels und dem Siedepunkt des entstehenden Alkyl- oder Arylthiophonsäuredichlorids und in Gegenwart eines Katalysators der allgemeinen Formel I oder II:

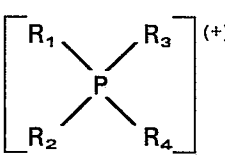

$A^{(-)}$ (I)

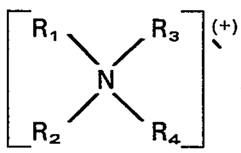

$A^{(-)}$ (II)

in welcher $R_1$, $R_2$, $R_3$ und $R_4$ gleiche oder verschiedene Alkyl-, Aryl-, Alkaryl- oder Aralkylreste mit 1 bis 22 C-Atomen bedeuten und A der anionische Rest einer anorganischen oder organischen Säure ist, durchführt, wobei die Menge des Katalysators 0,01 bis 5 Gew.-%, bezogen auf die Menge der Phosphankomponente, beträgt; dass man nach beendeter Reaktion das Alkyl- oder Arylthiophosphonsäuredichlorid aus dem Reaktionsgemisch abtrennt und den dabei anfallenden katalysatorhaltigen Rückstand für weitere Umsetzungen von Alkyl- oder Aryldichlorphosphanen mit Schwefel verwendet.

2. Verfahren nach Anspruch 1, dadurch gekennzeichnet, dass die Alkyl- oder Aryldichlorphosphane sowie die Alkyl- oder Arylthiophosphonsäurechloride 1 bis 8 Kohlenstoffatome besitzen.

3. Verfahren nach einem der Ansprüche 1 oder 2, dadurch gekennzeichnet, dass man die Reaktion bei einer Temperatur von 130-170°C durchführt.

4. Verfahren nach einem der Ansprüche 1 bis 3, dadurch gekennzeichnet, dass der Katalysator ein Tetraalkylammonium- oder Tetraalkylphosphoniumchlorid, -bromid, -sulfat, -nitrat oder -acetat ist.

5. Verfahren nach einem der Ansprüche 1 bis 4, dadurch gekennzeichnet, dass man als Ausgangsprodukt Methyl-, Ethyl- oder Phenyldichlorphosphan einsetzt.

6. Verfahren nach einem der Ansprüche 1 bis 5, dadurch gekennzeichnet, dass man die Phosphankomponente portionsweise in ein Gemisch aus Schwefel und dem Katalysator einträgt und nach beendeter Phosphanzugabe das Reaktionsgemisch einer Nachreaktionszeit von 5 bis 60 min aussetzt.

7. Verfahren nach einem der Ansprüche 1 bis 6, dadurch gekennzeichnet, dass die Menge des Katalysators 0,05-2 Gew.-% beträgt.

## Revendications

1. Procédé de préparation de dichlorures d'acides alkyl- ou arylthiophosphoniques par réaction d'alkyl- ou d'aryldichlorophosphines avec des quantités au moins stœchiométriques de soufre, à une température supérieure au point de fusion du soufre et en présence d'un catalyseur, et séparation du dichlorure d'acide alkyl- ou arylthiophosphonique formé du mélange de réaction après la fin de la réaction, caractérisé en ce que l'on effectue la réaction à une température entre le point de fusion du soufre et le point d'ébullition du dichlorure d'acide alkyl- ou arylthiophosphonique qui se forme et en présence d'un catalyseur de formule générale (I) ou (II):

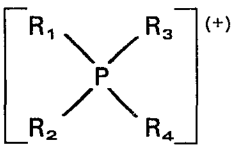 $A^{(-)}$ (I)

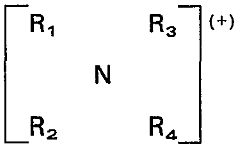 $A^{(-)}$ (II)

dans lesquelles $R_1$, $R_2$, $R_3$ et $R_4$ représentent des groupes alkyles, aryles, alkaryles ou aralkyles en $C_1$-$C_{22}$, identiques ou différents, et A est le reste anionique d'un acide inorganique ou organique, le catalyseur étant utilisé en quantité de 0,01 à 5% en poids, par rapport à la quantité de phosphine; en ce que l'on sépare, après la fin de la réaction, le dichlorure d'acide alkyl- ou arylthiophosphonique du mélange de réaction et utilise le résidu contenant le catalyseur ainsi obtenu pour de nouvelles réactions d'alkyl- ou d'aryldichlorophosphoniques avec le soufre.

2. Procédé selon la revendication 1, caractérisé en ce que les alkyl- ou aryldichlorophosphines, ainsi que les dichlorures d'acides alkyl- ou arylthiophosphoniques, présentent 1 à 8 atomes de carbone.

3. Procédé selon l'une des revendications 1 ou 2, caractérisé en ce que l'on effectue la réaction à une température de 130 à 170°C.

4. Procédé selon l'une des revendications 1 à 3, caractérisé en ce que le catalyseur est un chlorure, bromure, sulfate, nitrate ou acétate de tétraalkylammonium ou de tétraalkylphosphonium.

5. Procédé selon l'une des revendications 1 à 4, caractérisé en ce que l'on utilise comme produit de départ la méthyl-, l'éthyl- ou la phényldichlorophosphine.

6. Procédé selon l'une des revendications 1 à 5, caractérisé en ce que l'on introduit le composant phosphine par portions dans un mélange de soufre et de catalyseur et, après la fin de l'addition de phosphine, on soumet le mélange de réaction à une durée de postréaction de 5 à 60 min.

7. Procédé selon l'une des revendications 1 à 6, caractérisé en ce que la quantité de catalyseur est de 0,05 à 2% en poids.

## Claims

1. Process for making alkyl or arylthiophosphonic acid dichlorides by reacting an alkyl- or aryldichlorphosphine with at least stoichiometric proportions of sulfur, at a temperature above the melting point of sulfur and in the presence of a catalyst, and separating the resulting alkyl- or arylthiophosphonic acid dichloride from the reaction mixture, after the reaction is complete, which comprises: effecting the reaction at a temperature between the melting point of sulfur and the boiling point of the resulting alkyl- or arylthiophosphonic acid dichloride and in the presence of a catalyst of general formula (I) or (II):

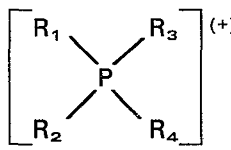 $A^{(-)}$ (I)

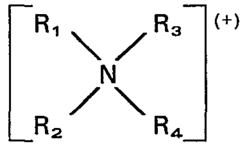 $A^{(-)}$ (II)

in which $R_1$, $R_2$, $R_3$ and $R_4$ stand for identical or different alkyl, aryl, alkaryl or aralkyl groups having from 1 to 22 carbon atoms and A is the anionic group of an organic or inorganic acid, the catalyst being used in a proportion of 0.01 to 5 weight percent, based on the quantity of the phosphine component; separating, after the reaction is complete, the alkyl- or arylthiophosphonic acid dichloride from the reaction mixture, and using resulting catalyst-containing residue for further reactions of alkyl- or aryldichlorophosphines with sulfur.

2. Process as claimed in Claim 1, wherein the alkyl- or aryldichlorophosphines, as well as the alkyl or arylthiophosphonic acid chlorides, contain 1 to 8 carbon atoms.

3. Process as claimed in one of Claims 1 or 2, wherein the reaction is effected at a temperature of 130 to 170°C.

4. Process as claimed in one of Claims 1 to 3, wherein the catalyst is a tetraalkylammonium or tetraalkylphosphonium chloride, bromide, sulfate, nitrate or acetate.

5. Process as claimed in one of Claims 1 to 4, wherein methyl-, ethyl- or phenyldichlorophosphine is used as feed material.

6. Process as claimed in one of Claims 1 to 5, wherein the phosphine component is added portionwise to a mixture of sulfur and catalyst and, after the phosphine addition is complete, the reaction mixture is allowed to undergo post-reaction over a period of 5 to 60 min.

7. Process as claimed in one of Claims 1 to 6, wherein the catalyst is used in a proportion of 0.05 to 2 weight percent.